# EUROPEAN PATENT APPLICATION

(11) **EP 0 622 978 A1**
(43) Date of publication of application: **02.11.1994**
(21) Application number: 94200846.7
(22) Date of filing: 29.03.1994
(51) Int. Cl.: H05B 41/392, H05B 41/29

(54) **Device for controlling to a desired value the light output of a high or low pressure gas discharge lamp**

(30) Priority: 26.04.1993 NL 9300710
(71) Applicant: NIJSSEN LIGHT DIVISION B.V., NL-2333 CC Leiden (NL)
(72) Inventor: Kühn, Otto Adolf, NL-6708 BW Wageningen (NL); Verbeek, Willem, NL-6708 KX Wageningen (NL)
(74) Representative: Hoijtink, Reinoud

(57) **Abstract**

To hold constant the desired light output of a high or low pressure gas discharge lamp in cold operation, the current through the gas discharge lamp is measured and the difference with a desired reference value is determined. On the basis of the measured difference the frequency is controlled of a high frequency alternating voltage which is generated by a continuously variable oscillator. When current flow through the lamp is too low the frequency is lowered, whereby the resistance in the branch in which the lamp is arranged is decreased and the current flow is increased until the desired value is reached.

## Description

The light output in gas discharge lamps is to a large degree dependent on ambient influences such as degree of humidity, temperature and the like. At low temperatures to below freezing point a gas discharge lamp starts with difficulty or not at all. When the temperature falls the passage of current through the lamp then becomes lower and light output decreases.

It is desired for many purposes to obtain a constant light output under changing conditions. This is for instance the case in lighting of plants in order to enhance the growth thereof. It is further desired during use in greatly varying conditions, for instance in the use of street lighting, to be able to ensure a constant light output over a large temperature range.

This is achieved according to the invention by a device for controlling to a desired value the light output of a high or low pressure gas discharge lamp in cold operation, with means for generating from a supply voltage a high frequency alternating voltage for supplying a gas discharge lamp over a frequency-dependent resistance, means for controlling the frequency of the high frequency alternating voltage, means for generating an adjustable reference value, means for measuring the current through the gas discharge lamp, means for determining a difference in the reference value and the measured current value and means for actuating the means for controlling the frequency of the high frequency alternating voltage on the basis of a measured difference.

Through feedback of the lamp current and the comparison with the reference value thereof the frequency of the high frequency alternating voltage can be controlled with the difference between both values. At a lower current flow the resistance in the branch in which the lamp is arranged can herein be lowered by a lower frequency and the current flow therefore increased.

Using the device according to the invention starting and holding of a gas discharge lamp at a nominal light output operation can be ensured over a large temperature range.

The means for controlling the frequency of the high frequency alternating voltage are preferably formed by a voltage-controlled continuously variable oscillator.

The frequency-dependent resistance is preferably a choking coil.

The reference value can be derived from a digital control signal or from an audio signal which can be transferred for instance to the mains supply network. This latter control option can find particular application in a system of public street lighting. Protection means are preferably present for switching off the means for controlling the frequency when the current in the lamp falls below the selected value. The power factor of the high frequency alternating voltage for the supply is held constant at roughly the value 1. This provides the advantage that in the case FETs are applied switching takes place more smoothly.

The invention will be further elucidated with reference to a block diagram.

In the converter 10 the input voltage with a frequency of 50 Hz is converted into a direct voltage by means of full rectification. The direct voltage of 310 V obtained herefrom is converted in the step-up converter 11 to a voltage of 400 V and converted in the converter 12 into a rectilinear alternating voltage. The frequency at the output of converter 12 is controlled by a voltage-controlled oscillator 13 via the pulse generator 14. When the resonance frequency has been reached the voltage is increased over the choking coil Li, whereby the lamp L will fire. The lamp resistance is thereby decreased so that the current flowing therethrough is limited. The voltage-controlled oscillator 13 provides a maintenance frequency of about 40 kHz. By means of the protective circuit 15 which is coupled via the transformer TR to the lamp circuit, the voltage-controlled oscillator 13 is switched off via a difference amplifier when the lamp current falls below the reference value. Restart is possible after an operation to reset the supply voltage.

A circuit 16 is further connected to the transformer. This circuit compares the value of the current through the lamp circuit with the reference value adjusted by the control circuit 17. At a current value which differs from the value corresponding to the reference value the variable oscillator 13 is readjusted. The oscillation frequency of oscillator 13 is therefore changed, which in turn affects the frequency of the pulse generator and the converter 12. When there is a lower current through the lamp circuit a lower frequency will be generated whereby the resistance value of choking coil Li falls and the current in the lamp circuit will therefore increase again.

Due to this feedback the light output of the lamp is held practically constant within wide limits, for instance a temperature range of between -20°C and +40°C.

The setting of the reference value in circuit 17 can take place by analog means via the digital-analog converter 18 or by means of the audio converting circuit 19 via an audio signal. As a result of the invention lamps in cold operation, that is, without heating filament, can be started and kept in operation.

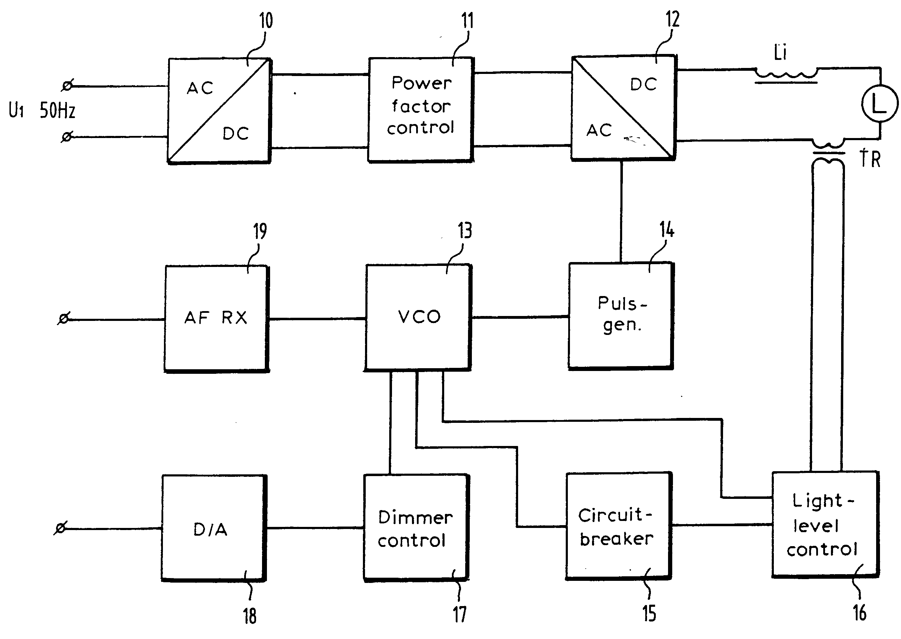

## Claims

1. Device for controlling to a desired value the light output of a high or low pressure gas discharge lamp in cold operation, with means for generating from a supply voltage a high frequency alternating voltage for supplying a gas discharge lamp over a frequency-dependent resistance, means for controlling the frequency of the high frequency alternating voltage, means for generating an adjustable reference value, means for measuring the current through the gas discharge lamp, means for determining a difference in the reference value and the measured current value and means for actuating the means for controlling the frequency of the high frequency alternating voltage on the basis of a measured difference.

2. Device as claimed in claim 1, **characterized in that** the means for controlling the frequency of the high frequency alternating voltage are formed by a voltage-controlled continuously variable oscillator.

3. Device as claimed in claims 1-2, **characterized in that** the frequency-dependent resistance is a choking coil.

4. Device as claimed in claims 1-3, **characterized in that** the reference value is derived from a digital control signal.

5. Device as claimed in claims 1-4, **characterized in that** the reference value is derived from an audio signal.

6. Device as claimed in claim 5, **characterized in that** the audio signal is transferred over the mains supply network.

7. Device as claimed in claims 1-6, **characterized by** protection means for switching off the means for controlling the frequency when the current through the lamp falls below a selected value.

8. Device as claimed in claims 1-7, **characterized in that** the power factor of the high frequency alternating voltage for the supply is held constant at roughly the value 1.
